(19) Europäisches Patentamt
European Patent Office
Office européen des brevets

(11) **EP 4 107 852 B1**

(12) **EUROPEAN PATENT SPECIFICATION**

(45) Date of publication and mention
of the grant of the patent:
**12.03.2025 Bulletin 2025/11**

(21) Application number: **20848723.1**

(22) Date of filing: **31.12.2020**

(51) International Patent Classification (IPC):
*H02P 6/32* (2016.01)    *H02P 9/30* (2006.01)

(52) Cooperative Patent Classification (CPC):
**H02P 6/32; H02P 9/302; H02P 9/305**

(86) International application number:
**PCT/IB2020/062577**

(87) International publication number:
**WO 2021/165742 (26.08.2021 Gazette 2021/34)**

(54) **SYNCHRONOUS ELECTRIC GENERATOR AND METHOD FOR CONTROLLING THE FREQUENCY AND THE AMPLITUDE OF THE INDUCED VOLTAGE ON THE STATOR WINDINGS OF THE SYNCHRONOUS GENERATOR THEREOF**

SYNCHRONER ELEKTRISCHER GENERATOR UND VERFAHREN ZUR STEUERUNG DER FREQUENZ UND DER AMPLITUDE DER INDUZIERTEN SPANNUNG AUF DEN STATORWICKLUNGEN DES SYNCHRONEN GENERATORS

GÉNÉRATEUR ÉLECTRIQUE SYNCHRONE ET PROCÉDÉ DE CONTRÔLE DE LA FRÉQUENCE ET DE L'AMPLITUDE DE LA TENSION INDUITE SUR LES ENROULEMENT DU STATOR DU GÉNÉRATEUR SYNCHRONE.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2020 IT 202000003632**

(43) Date of publication of application:
**28.12.2022 Bulletin 2022/52**

(73) Proprietor: **Leonardo S.p.a.**
**00195 Roma (IT)**

(72) Inventor: **ANASTASIO, Vincenzo**
**10146 Torino (IT)**

(74) Representative: **Studio Torta S.p.A.**
**Via Viotti, 9**
**10121 Torino (IT)**

(56) References cited:
**US-A- 5 675 188        US-A1- 2006 087 293**
**US-A1- 2016 365 814**

**Description**

CROSS-REFERENCE TO RELATED APPLICATIONS

This patent application claims priority from Italian patent application no. 102020000003632 filed on 21/02/2020.

SECTOR OF THE ART

The present invention relates to a synchronous electric generator and the related method for controlling the frequency and amplitude of the voltage induced on the stator windings of the synchronous electric generator. In particular, reference will be made hereinafter to a "brushless" synchronous electric generator.

PRIOR ART

They are known synchronous and asynchronous electric machines, used both as motors and as electric generators. Hereinafter, reference is made to synchronous electric machines of the "brushless" type used as electric generators.
Over the last years, synchronous electric generators, in particular of the "brushless" type, have been used in different application fields, such as aerospace or wind-fields, (in particular, in wind turbines).
In greater detail, in a known-type synchronous electric generator, the frequency of the voltage induced on the stator windings (hereinafter also referred to as stator frequency) $f_{st}$ is strictly linked to the rotation velocity of the rotor through the equation (1):

$$f_{st} = \frac{N_r \cdot P}{60} \qquad (1)$$

where $N_r$ is the rotation velocity of the rotor expressed in revolutions per minute (RPM) and P is the number of poles of the synchronous electric generator (which are defined in the construction step). As it is clear from the equation (1), once the number of poles P is set, the stator frequency $f_{st}$ directly depends on the rotation velocity $N_r$ of the rotor.
However, in case the rotation velocity $N_r$ of the rotor undergoes non-negligible variations as a result, for example, of variations in a velocity regime of a main motor adapted to start the rotor of the "brushless" synchronous generator, also the stator frequency $f_{st}$ will undergo corresponding non-negligible variations.
Known solutions make available "brushless" synchronous generators using adjustment systems, such as systems to stabilize the frequency of the power energy produced by mechanical systems which stabilize the velocity input to the "brushless" synchronous generator or, alternatively, electronic converters of the static type adapted to convert a variable frequency voltage, provided as input to the "brushless" synchronous generator, into an output fixed-frequency alternating voltage. However, such known solutions make such electric machines, in particular such adjustment systems, bulky and heavy.
In addition, the manufacturing processes of the aforesaid electric machines are complex and expensive.
US patent application US 2016/365814 A1 relates to a variable speed analog current (AC) generator system.
US patent application US 5,675,188 A relates to an adjustable speed gas turbine power generation apparatus configured to maintain a rated output of the same gas turbine generation apparatus irrespective of ambient temperature change.

DESCRIPTION OF THE INVENTION

The object of the present invention is to make available a synchronous electric generator and a related control method which overcome the drawbacks of the prior art.
According to the present invention a synchronous electric generator and a related method for controlling the frequency and amplitude of the voltage induced on the stator windings of the synchronous electric generator are made, as defined in the independent claims.
The dependent claims describe preferred embodiments of the present invention forming an integral part of the present disclosure.

BRIEF DESCRIPTION OF THE DRAWINGS

For a better understanding of the present invention a preferred embodiment thereof will be now described, provided by way of non-limiting example with reference to the accompanying drawings, wherein:

- figure 1 schematically shows the present synchronous "brushless" generator according to a preferred embodiment; and
- figure 2 schematically shows the present method for controlling the frequency and amplitude of the voltage implemented by the present synchronous "brushless" generator.

PREFERRED EMBODIMENTS OF THE INVENTION

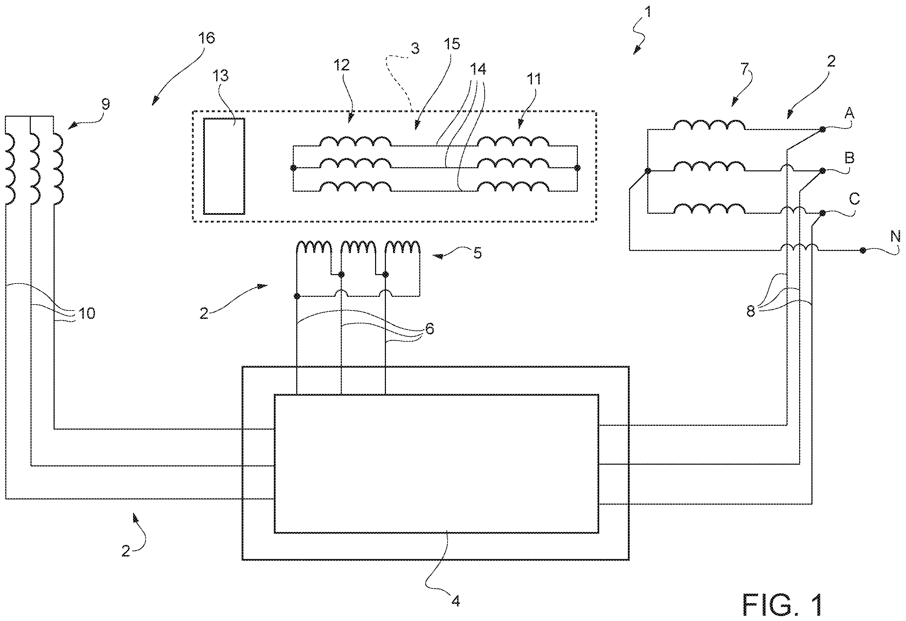

Figure 1 shows a "brushless" synchronous electric generator 1 (hereinafter referred to as generator 1), which comprises a stator 2 and a rotor 3, which are magnetically coupled between each other; and a control unit 4, operatively coupled to the stator 2.

The stator 2 comprises: an excitation winding 5, which is operatively coupled to the control unit 4; and a first and second stator winding 7, 9 which are separate and independent from the excitation winding 5, as well as operatively coupled to the control unit 4. In particular, the first stator winding 7 represents a main stator winding of the stator 2 of the generator 1.

In the embodiment of figure 1, the excitation winding 5 and the first and second stator winding 7, 9 are three-phase systems (shown in a star-shaped configuration in figure 1), coupled to the control unit 4 by a respective first, second and third three-phase line 6, 8, 10. In greater detail, the first stator winding 7 comprises one first, one second and one third connection terminal A, B, C connected to the control unit 4 by the second three-phase line 8. Given the star-shaped configuration of the first stator winding 7, the latter further has a neutral terminal N, connected to the connection terminals A, B, C of the generator 1.

The rotor 3 comprises: a rotor winding 15, including one first and one second rotor sub-windings 11, 12. The rotor sub-winding 11 is magnetically coupled to the first stator winding 7 and the second rotor sub-winding 12 is magnetically coupled to the excitation winding 5. The rotor 3 further comprises at least a magnetic element 13, independent from the rotor winding 15 and magnetically coupled to the second stator winding 9 in such a way to form an auxiliary electric generator 16.

In the embodiment of figure 1, the first and the second rotor sub-winding 11, 12 are three-phase systems (shown in a star-shaped configuration in figure 1), connected between each other by a fourth three-phase line 14. In addition, in the embodiment shown in figure 1, the at least one magnetic element 13 is a permanent magnetic generator (PMG) configured to rotate integrally with the rotor 3 when in use; in particular, when the rotor 3 (and, thus, the at least one magnetic element 13) is rotated, the at least one magnetic element 13 induces a supply voltage $V_{supply}$, as well as a corresponding power supply current $i_{supply}$ (in particular, of the AC type) in the second stator winding 9, which are thus provided as an input to the control unit 4 such to supply the latter. In other words, the auxiliary electric generator 16 is configured to supply the control unit 4 taking advantage of the rotation of the rotor 3 and without using power supply systems outside the generator 1.

The connection terminals A, B, C are the terminals at which the control unit 4 is able to detect and, therefore, measure the voltage induced in the first stator winding 7 as a result of a rotation of the rotor 3 when it is excited by the excitation winding 5; in particular, the control unit 4 is able to detect the oscillation frequency and the voltage amplitude induced by the rotor 3 to the stator 2 when it is in use.

In the embodiment of figure 1, the control unit 4 comprises an inverter configured to convert direct currents (DCs) or, in alternative, the power supply current $i_{supply}$ coming from the second stator winding 9 as a result of the induction produced by the at least one magnetic element 13, into three-phase alternating currents having a desired frequency, the latter being controlled according to a frequency control method hereinafter described in greater detail. In addition, the control unit 4 comprises a controller (not shown), configured to adjust the amplitude of the voltages provided by the inverter of the control unit 4 according to the modes described with reference to a method for controlling the voltage amplitude hereinafter described in more detail.

In another embodiment not shown, the at least one magnetic element 13 is a multipolar machine and the control unit 4 comprises a converter (for example, a cycle converter) instead of the inverter.

The excitation winding 5 is configured, in use, to induce an induced current in the rotor 3 (in particular, on the second rotor sub-winding 12) by means of an electric excitation current $i_{ex}$, generated by the control unit 4 and made flown in the aforesaid excitation winding 5; such induced current thus flows also in the first rotor sub-winding 11 and produces a rotating magnetic field which induces a voltage on the first stator winding 7 according to the modes disclosed hereinafter in greater detail.

In use, the rotor 3 is rotated by an external stimulus (e.g., provided by a main motor coupled to the rotor 3) at a rotation velocity $N_r'$; in particular, the rotation velocity $N_r'$ varies over time.

Furthermore, the control unit 4 provides an electric excitation current $i_{ex}$, which is a three-phase alternating current and has an excitation frequency $f_{ex}$ and an excitation current amplitude $\Delta i_{ex}$, at the excitation winding 5. The electric excitation current $i_{ex}$ flowing into the excitation winding 5 creates a rotating magnetic field $B_{rot}$, integral with the stator 2, and that has an excitation frequency $f_{ex}$ of the electric excitation current $i_{ex}$; in other words, the rotating magnetic field Brot rotates at the excitation frequency $f_{ex}$ velocity.

The rotating magnetic field $B_{rot}$ thus generated couples with the second rotor sub-winding 12, inducing on the latter an induced electric excitation current $i_{ex,ind}$; in detail, the induced electric excitation current $i_{ex,ind}$ is alternating, tree-phase and has a frequency equal to the excitation frequency $f_{ex}$. In addition, the induced electric excitation current $i_{ex,ind}$ flows also in the first rotor sub-winding 11 by virtue of the connection between the first and the second rotor sub-winding 11, 12 by means of the fourth three-phase line 14; in other words, the induced electric excitation current $i_{ex,ind}$, induced by the rotating magnetic field $B_{rot}$, flows in the entire rotor winding 15 of the rotor 3.

The induced electric excitation current $i_{ex,ind}$, passing into the first rotor sub-winding 11, generates an induction rotating magnetic field $B_{ind}$, which affects the first stator winding 7 and induces an alternating voltage $V_s$, having a frequency $f_s$ and a voltage amplitude $\Delta V_s$, on the first stator winding 7. In particular, the induction rotating magnetic field $B_{ind}$ is rotating and has a rotation velocity which depends both on the rotation velocity $N_r'$ of the rotor 3 and on the rotation velocity of the rotating magnetic field $B_{rot}$.

In greater detail, the frequency $f_s$ and the voltage amplitude $\Delta V_s$ of the alternating voltage $V_s$ induced on the first stator winding 7 by the induction rotating magnetic field $B_{ind}$ can be measured at the connection terminals A, B, C of the generator 1 by the control unit 4. Furthermore, considering the above discussed, the frequency $f_s$ is defined according to the equation (2):

$$f_s = \frac{N_r'}{60} \pm f_{ex} \qquad\qquad 2.$$

That is, the frequency $f_s$ of the alternating voltage $V_s$ induced on the first stator winding 7 depends in a directly proportional way both on the rotation velocity $N_r'$ of the rotor 3 and on the excitation frequency $f_{ex}$ of the electric excitation current $i_{ex}$; therefore, the induction rotating magnetic field $B_{ind}$ affects the first stator winding 7 with a velocity which is equal to the sum of the rotation velocity $N_r'$ of the rotor 3 and the velocity of the rotating magnetic field $B_{rot}$ produced in the excitation magnetic field. In other words, at the first stator winding 7, a voltage induction occurs which depends both on the rotation velocity $N_r'$ and on the excitation frequency $f_{ex}$.

It must be noted that, as it can be inferred from the equation (2), if the rotor 3 is still, i.e. the rotation velocity $N_r'$ is null, the frequency $f_s$ of the alternating voltage $V_s$ induced on the first stator winding 7 is equal to the excitation frequency $f_{ex}$ of the electric excitation current $i_{ex}$ provided from the control unit 4.

By contrast, without excitation by the excitation winding 5 (i.e., without the electric excitation current $i_{ex}$ and, therefore, the excitation frequency $f_{ex}$), the first rotor sub-winding 11 does not produce the induction rotating magnetic field $B_{ind}$, as there is neither the induction of the rotating magnetic field $B_{rot}$ nor, thus, the induction of the induced excitation electric current $i_{ex,ind}$; therefore, there is no induction of the alternating current $V_s$ on the first stator winding 7.

Furthermore, it must be noted that, by supplying the excitation winding 5 with an electric excitation current $i_{ex}$ having a null excitation frequency $f_{ex}$ (i.e., the control unit 4 provides a direct electric excitation current $i_{ex}$), a rotor electric current $i_r$ is induced on the second rotor sub-winding 12; in particular, the rotor electric current $i_r$ is an alternating current having a frequency $f_r$ that is directly proportional to the rotation velocity $N_r'$. In other words, the frequency $f_r$ of the rotor electric current $i_r$ is equal to the frequency of the rotation velocity $N_r'$. Consequently, by virtue of the connection between the first and the second sub-winding 11, 12 by means of the fourth three-phase line 14, the rotor electric current $i_r$ flows in the first rotor sub-winding 11, thus producing a rotating magnetic field B with a rotation velocity equal to the rotation velocity $N_r'$ of the rotor 3; in particular, the magnetic field B induces a corresponding alternating current $V_s$, having a corresponding frequency $f_s$ and a corresponding voltage amplitude $\Delta V_s$ on the first rotor winding 7. Therefore, as it is clear from the equation (2), the frequency $f_s$ of the alternating voltage $V_s$ is directly proportional only to the rotation velocity $N_r'$ of the rotor 3.

It must also be noted that, as previously said, the mechanical rotation of the rotor 3 at the rotation velocity $N_r'$ involves a corresponding rotation also of the at least one magnetic element 13, which, therefore, induces the supply voltage $V_{supply}$, as well as the corresponding power supply electric current $i_{supply}$ in the second stator winding 9; thereby, the rotation of the rotor 3 allows to supply the control unit 4 by means of the auxiliary electric generator 16. It must also be noted that, as known, the frequency of the supply voltage $V_{supply}$ is strictly linked to the rotation velocity $N_r'$; in other words, the frequency of the supply voltage $V_{supply}$ is indicative of the rotation velocity $N_r'$.

As previously said, the variability of the rotation velocity $N_r'$ may determine a corresponding variability of the frequency $f_s$ of the alternating voltage $V_s$, in particular with respect to a predetermined reference frequency value $f_{ref}$ (e.g., equal to 400 Hz, in particular in the aeronautical field). In addition, the voltage amplitude $\Delta V_s$ of the alternating voltage $V_s$ may vary with respect to a predetermined reference voltage amplitude value $\Delta V_{ref}$ (e.g., in particular in the aeronautical field, equal to an average quadratic value equal to 115 V or 200 V, corresponding to a maximum value equal to 162 V or, respectively, 282 V in a sinusoidal regime) due to the induction to the air gap, i.e. due to a corresponding excitation current

amplitude $\Delta i_{ex}$ of the excitation current $i_{ex}$ provided to the excitation winding 5 by the control unit 4 according to the previously described modes. In other words, the alternating voltage $V_s$ measured at the connection terminals A, B, C may vary due to the variation of the current delivered by the generator 1 to a load, the latter being connected to connection terminals A, B, C, N as a result of an inner impedance thereof.

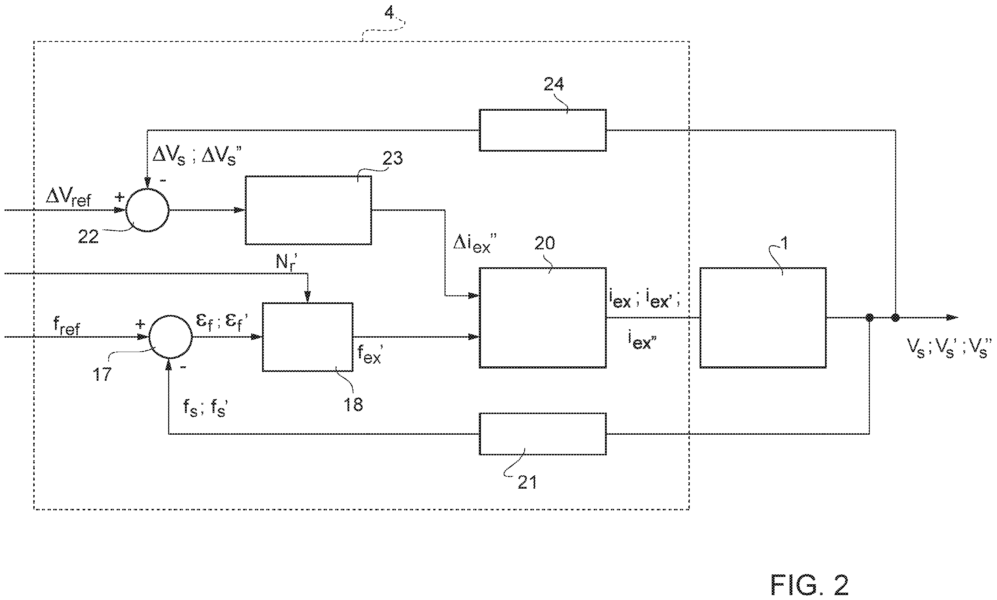

Referring to figure 2, methods for controlling the frequency and, respectively, the voltage amplitude induced by the rotor 3 in the stator 2 will now be described; in particular, such control methods allow the generator 1 to manage the possible variations of frequency $f_s$ and of the voltage amplitude $\Delta V_s$ of the alternating voltage $V_s$ to the determined connection terminals A, B, C as a result of the variations in the rotation velocity $N_r'$ and, respectively, of the amplitude of excitation current $\Delta i_{ex}$ of the electric excitation current $i_{ex}$.

In the frequency control mode, the control unit 4 detects at the connection terminals A, B, C the frequency $f_s$ of the alternating voltage $V_s$ on the first stator winding 7, the latter being induced according to the modes previously described; if, at a first comparison block 17 of the control unit 4 (in particular, of the inverter of the control unit 4), the latter determines that there is a deviation (i.e. a frequency error $\varepsilon_f$), between the frequency $f_s$ detected and the reference frequency value $f_{ref}$, the control unit 4 generates an error signal indicative of the aforesaid frequency error $\varepsilon_f$.

Thereafter, such error signal is transmitted to a first processing block 18, which is further configured to receive a signal indicative of the rotation velocity $N_r'$, that can be detected from the frequency of the supply voltage $V_{supply}$ on the second stator winding 9.

On the basis of the frequency error $\varepsilon_f$ and of the rotation velocity $N_r'$, the first processing block 18 determines a new value of excitation frequency $f_{ex}$, hereinafter indicated as a further excitation frequency $f_{ex}'$, which characterizes a further corresponding electric excitation current $i_{ex}'$, the latter generated by an excitation block 20, configured to receive the further excitation frequency $f_{ex}'$ and determine the further electric excitation current $i_{ex}'$ based on the aforesaid further excitation frequency $f_{ex}'$. In greater detail, similarly to the electric excitation current $i_{ex}$, the further electric excitation current $i_{ex}'$ is a three-phase alternating current and it is the current that the control unit 4 is adapted to provide to the excitation windings 5 whose frequency allows to compensate the variations of the frequency $f_s$ of the alternating voltage $V_s$ detected at the connection terminals A, B, C as a result of the variations of the rotation velocity $N_r'$ of the generator 1 (schematized in figure 2 by means of the connection between the excitation block 20 and a block 1, the latter indicative of the generator 1, and, therefore, identified with the same reference number).

The control unit 4 thus operates similarly to what previously described, i.e. provides the further electric excitation current $i_{ex}'$ to the excitation winding 5 in such a way to cause the previously discussed electromagnetic inductions referring to the induction by means of the electric excitation current $i_{ex}$.

In detail, the aforesaid operations determine, finally, the induction of a further alternating voltage $V_s''$, having a further frequency $f_s''$ and a further voltage amplitude $\Delta V_s''$, on the first stator winding 7.

Similarly to what above discussed, the further frequency $f_s'$ and the further voltage amplitude $\Delta V_s'$ of the further alternating voltage $V_s'$ induced on the first stator winding 7 can be measured at the connection terminals A, B, C of the generator 1 by the control unit 4; in particular, referring to figure 2, a first feedback block 21, being part of the control unit 4, detects the aforesaid further frequency $f_s'$, which, similarly to what discussed with reference to the frequency $f_s$ (in particular, with reference to the equation (2)), also depends directly both on the rotation velocity $N_r'$ of the rotor 3 and on the further excitation frequency $f_{ex}'$ of the further electric excitation current $i_{ex}'$.

Still referring to figure 2, the first feedback block 21, once determined the frequency $f_s'$, provides the latter to the comparison block 17.

The operations previously described with reference to the further frequency $f_s'$ are repeated once more if the first comparison block 17 determines that there is again a deviation (i.e., a further frequency error $\varepsilon_f'$) between the further frequency $f_s'$ and the reference frequency $f_{ref}$. Alternatively, if the first comparison block 17 detects that the further frequency $f_s'$ and the reference frequency $f_{ref}$ are substantially equal (i.e., the frequency error $\varepsilon_f'$ is substantially null), the control unit 4 does not modify the further excitation frequency $f_{ex}'$ of the further electric excitation current $i_{ex}'$ provided to the excitation windings 5, i.e. the variations of the rotation velocity $N_r'$ are compensated by the further excitation frequency $f_{ex}'$ of the further electric excitation current $i_{ex}'$ provided.

Therefore, in a frequency control mode, the control unit 4 is configured to adjust the frequency of the current provided to the excitation winding 5 as a result of the rotation speed $N_r'$ of the rotor 3 and of the reference frequency value $f_{ref}$. In other words, in a frequency control mode, the control unit 4 is configured to compensate variations of the rotation velocity $N_r'$ of the rotor 3 by a feedback control which allows to virtually modify the rotation velocity $N_r'$ by means of the current frequency provided by the control unit 4 to the excitation winding 5.

It must be noted that the aforesaid frequency control of the voltage induced on the first stator winding 7 is performed in a constant way, i.e. the control unit 4 monitors at any time instant the aforesaid frequency value; therefore, the present generator 1 allows to monitor and adjust the frequency of the induced voltage on the first stator winding 7 substantially in real time.

In the control mode of the voltage amplitude, the control unit 4 detects at the connection terminals A, B, C the voltage amplitude $\Delta V_s$ of the alternating current $V_s$ on the first stator winding 7; if, at a second comparison block 22 of the control unit 4, the latter determines that there is a deviation (i.e. an error in the voltage amplitude $\varepsilon_v$ ) between the detected voltage amplitude $\Delta V_s$ and the value of the reference magnitude amplitude $\Delta v_{ref}$, the control unit 4 generates an error signal indicating the aforesaid error of voltage amplitude $\varepsilon_v$.

Thereafter, such error signal is transmitted to a second processing block 23.

Therefore, on the basis of the voltage amplitude error $\varepsilon_v$, the second processing block 23 determines a further excitation current $\Delta i_{ex}$", which characterizes a further electric excitation current $i_{ex}$", the latter generated by the excitation block 20 on the basis of the aforesaid further excitation current $\Delta i_{ex}$"

The control unit 4 thus operates similarly to what previously described, i.e. provides the further electric excitation current $i_{ex}$' to the excitation winding 5 in such a way to cause the electromagnetic inductions previously discussed referring to the induction by means of the electric excitation current $i_{ex}$ and of the further electric excitation current $i_{ex}$' of the frequency control mode.

In detail, the aforesaid operations determine, finally, the induction of a further alternating voltage $V_s$", having a further frequency $f_s$" and a further voltage amplitude $\Delta V_s$", on the first stator winding 7. In particular, the further voltage frequency $f_s$ can be measured at the connection terminals A, B, C by a second feedback block 24, which is further configured to provide the further voltage amplitude $\Delta V_s$" detected at the second comparison block 22.

The operations described with reference to the further voltage amplitude $\Delta V_s$" are repeated once more if the second comparison block 22 determines that there is again a deviation (i.e., a further voltage error $\varepsilon_v$') between the further voltage amplitude $\Delta V_s$" and the reference voltage amplitude $\Delta V_{ref}$. Alternatively, if the second comparison block 22 detects that the further voltage amplitude $\Delta V_s$" and the reference voltage amplitude $\Delta V_{ref}$ are substantially equal (i.e., the voltage error $\varepsilon_f$' is substantially null), the control unit 4 does not modify the further amplitude of excitation current $\Delta i_{ex}$" of the further electric excitation current $i_{ex}$' provided to the excitation windings 5, i.e. the further voltage amplitude $\Delta V_s$" is stabilized at the reference voltage amplitude $\Delta V_{ref}$.

Therefore, in a voltage control mode, the control unit 4 is configured to adjust the amplitude of the electric current provided to the excitation winding 5 as a result of the variations in the amplitude of the alternating current induced in the stator winding 7. In other words, in a voltage amplitude control mode, similarly to the frequency control mode, the control unit 4 is configured to compensate variations of the voltage amplitude induced on the first stator winding 7 with respect to a reference amplitude value by a feedback control by means of the amplitude of the electric current provided to the excitation winding 5.

It must be noted that, even in the voltage amplitude control mode, the aforesaid control of the amplitude of the voltage induced of the first stator winding 7 is performed in a constant way, i.e. the control unit 4 monitors at any time the aforesaid value of the amplitude of the induced voltage; therefore, the present generator 1 allows to monitor and adjust the amplitude of the voltage induced on the first stator winding 7 substantially in real time.

The aforesaid frequency and voltage amplitude control modes may be performed as separate from each other or in combination between each other, such to separately, or respectively control, simultaneously the frequency and amplitude of the voltage induced on the first stator winding 7 of the stator 2.

The synchronous electric generator and the herein described related control method have several advantages.

First of all, the present generator 1 allows to stabilize both the frequency and the amplitude of the voltage induced on the first stator winding 7 to predetermined respective frequency and amplitude values. In fact, the control unit 4 is able to compensate variations of the frequency $f_s$ of the alternating current $V_s$ induced on the first stator winding 7 with respect to a reference frequency value $f_{ref}$ as a result of the variation in the rotation velocity $N_r$' of the rotor 3; furthermore, the control unit 4 is configured to compensate variations of the voltage amplitude $\Delta V_s$ of the alternating voltage $V_s$ with respect to the reference value of voltage amplitude $\Delta V_{ref}$ as a result of the variations of the excitation current amplitude $\Delta i_{ex}$. Furthermore, the present synchronous electric generator is less bulky and lighter than the known-type electric machines, as it does not use either external adjustment systems or supply systems, as it makes use of the excitation winding 5 for controlling the frequency and amplitude of the voltage induced on the first stator winding 7 and, respectively, of the auxiliary electric generator 16; in addition, the present synchronous electric generator is of easy construction.

Furthermore, the windings of the stator 2 and rotor 3 may be multiphase, i.e. they may be systems with a number of phases greater than three.

LIST OF THE REFERENCE NUMBERS OF THE FIGURE

| 1 | "brushless" synchronous electric generator |
| 2 | stator |
| 3 | rotor |
| 4 | control unit |
| 5 | excitation winding |

| | | |
|---|---|---|
| 6 | first three-phase line |
| 7 | first stator winding |
| 8 | second three-phase line |
| 9 | second stator winding |
| 10 | third three-phase line |
| 11 | first rotor sub-winding |
| 12 | second rotor sub-winding |
| 13 | magnetic element |
| 14 | fourth three-phase line |
| 15 | rotor winding |
| 16 | auxiliary electric generator |
| A | first connection terminal |
| B | second connection terminal |
| C | third connection terminal |
| 17 | first comparison block |
| 18 | first processing block |
| 20 | excitation block |
| 21 | first feedback block |
| 22 | second comparison block |
| 23 | second processing block |
| 24 | second feedback block |
| $f_{st}$ | stator frequency |
| $N_r$ | rotation velocity |
| P | poles |
| $N_r'$ | rotation velocity |
| $V_{supply}$ | supply voltage |
| $i_{supply}$ | power supply current |
| $i_{ex}$ | electric excitation current |
| $f_{ex}$ | excitation frequency |
| $\Delta i_{ex}$ | excitation current amplitude |
| $i_{ex, ind}$ | induced excitation current |
| $B_{rot}$ | rotating magnetic field |
| $B_{ind}$ | induction rotating magnetic field |
| $V_s$ | alternating current |
| $\Delta V_s$ | voltage amplitude |
| $f_s$ | frequency |
| B | magnetic field |
| $i_r$ | rotor electric current |
| $f_r$ | frequency |
| $f_{ref}$ | reference frequency |
| $\Delta V_{ref}$ | reference voltage amplitude |
| $\varepsilon_f$ | frequency error |
| $f_{ex}'$ | further excitation frequency |
| $i_{ex}'$ | further electric excitation current |
| $V_s'$ | further alternating voltage |
| $f_s'$ | further frequency |
| $\Delta V_s'$ | further voltage amplitude |
| $\varepsilon_f'$ | further frequency error |
| $\varepsilon_v$ | voltage amplitude error |
| $\Delta i_{ex}''$ | further excitation current amplitude |
| $i_{ex}''$ | further electric excitation current |
| $V_s''$ | further alternating voltage |
| $f_s''$ | further frequency |
| $\Delta V_s''$ | further voltage amplitude |
| $\varepsilon_v'$ | further voltage amplitude error |

**Claims**

1. Synchronous electric generator (1) comprising:

   a stator (2) including:

   - an excitation winding (5); and
   - a first and second stator winding (7, 9) which are separate and independent from the excitation winding (5);

   a rotor (3) comprising:

   - a rotor winding (15) including one first and one second rotor sub-windings (11, 12), the first rotor sub-winding (11) being magnetically coupled to the first stator sub-winding (7) and the second rotor sub-winding (12) being magnetically coupled to the excitation winding (5); and
   - at least a magnetic element (13) independent from the rotor winding (15), mounted so as to rotate integrally with the rotor (3) and arranged so as to magnetically couple with the second stator winding (9); and a control unit (4) operatively coupled to the stator (2);

   wherein the excitation winding (5) and the first and second stator winding (7, 9) are three-phase systems and are coupled to the to the control unit (4) by respective three-phase lines (6, 8, 10),
   wherein the synchronous electric generator (1) further comprises an auxiliary electric generator (16) connected to the control unit (4) to electrically supply the control unit (4) and comprises the at least magnetic element (13) and the second stator winding (9);
   wherein the control unit (4) is configured to provide to the excitation winding (5) an electric excitation current ($i_{ex}$) which is a three-phase alternating current and has an excitation frequency ($f_{ex}$) and an excitation current amplitude ($\Delta i_{ex}$), so as to generate a rotating magnetic field ($B_{rot}$) having a frequency equal to the excitation frequency ($f_{ex}$) of the electric excitation current ($i_{ex}$);
   the rotating magnetic field ($B_{rot}$) being configured to induce an induced electric excitation current ($i_{ex,ind}$) on the second rotor sub-winding (12) which is alternating, three-phase and has a frequency equal to the excitation frequency ($f_{ex}$);
   the induced electric excitation current ($i_{ex,ind}$) is configured to flow in the first rotor sub-winding (11) so as to generate an induction rotating magnetic field ($Bi_{nd}$) such as to induce an alternating voltage ($V_s$), having a respective frequency ($f_s$) and a respective voltage amplitude ($\Delta V_s$), on the first stator winding (7);
   wherein the frequency ($f_s$) of the alternating voltage ($V_s$) induced on the first stator winding (7) depends in a directly proportional way both on a rotation velocity ($N_r'$) of the rotor (3) and on the excitation frequency ($f_{ex}$);

   **characterized in that**
   the synchronous electric generator (1) is configured to regulate the frequency ($f_s$) and the amplitude ($\Delta V_s$) of the alternating voltage ($V_s$) with respect to respective desired values ($f_{ref}$, $V_{ref}$) as a function of a desired value ($\Delta V_{ref}$) of the voltage amplitude ($\Delta V_s$; $\Delta V_s'$; $\Delta V_s''$) of the alternating voltage ($V_s$; $V_s'$; $V_s''$) induced in the stator winding (7) and as a function of the rotation velocity ($N_r'$) of the rotor (3) and of the electric excitation current ($i_{ex}$) in the excitation winding (5) by varying the amplitude of the induced electric excitation current ($i_{ex,ind}$) by varying the excitation current amplitude ($\Delta i_{ex}$) of the electric excitation current ($i_{ex}$).

2. The synchronous electric generator (1) according to claim 1, wherein the rotation velocity of the rotating magnetic field ($B_{rot}$) is adjusted by varying a frequency of the excitation electric current ($i_{ex}$).

3. The synchronous electric generator (1) according to claim 1 or 2, wherein the velocity of the induction rotating magnetic field ($Bi_{nd}$) depends both on the rotation velocity ($N_r'$) of the rotor (3) and on the rotation velocity of the rotating magnetic field ($B_{rot}$).

4. The synchronous electric generator (1) according to claim 1, wherein:

   the at least magnetic element (13) comprises at least one permanent magnet; and
   the control unit (4) comprises an inverter connected to the auxiliary electric winding (9).

5. The synchronous electric generator (1) according to claim 1, wherein:

the at least magnetic element (13) is multipolar; and
the control unit (4) comprises a cycloconverter connected to the auxiliary electric winding (9).

**6.** Control method of a synchronous electric generator (1) comprising:

a stator (2) including:

- an excitation winding (5); and
- a first and second stator winding (7, 9) which are separate and independent from the excitation winding (5);

a rotor (3) comprising:

- a rotor winding (15) including one first and one second rotor sub-windings (11, 12), the first rotor sub-winding (11) being magnetically coupled to the first stator sub-winding (7) and the second rotor sub-winding (12) being magnetically coupled to the excitation winding (5); and
- at least a magnetic element (13) independent from the rotor winding (15), mounted so as to rotate integrally with the rotor (3) and arranged so as to magnetically couple with the second stator winding (9); and a control unit (4) operatively coupled to the stator (2);

wherein the excitation winding (5) and the first and second stator winding (7, 9) are three-phase systems and are coupled to the to the control unit (4) by respective three-phase lines (6, 8, 10),
wherein the synchronous electric generator (1) further comprises an auxiliary electric generator (16) connected to the control unit (4) to electrically supply the control unit (4) and comprises the at least magnetic element (13) and the second stator winding (9);
wherein the control method comprises the steps of:

- providing to the excitation winding (5) an electric excitation current ($i_{ex}$) which is a three-phase alternating current and has an excitation frequency ($f_{ex}$) and an excitation current amplitude ($\Delta i_{ex}$), so as to generate a rotating magnetic field ($B_{rot}$) having a frequency equal to the excitation frequency ($f_{ex}$) of the electric excitation current ($i_{ex}$), the rotating magnetic field ($B_{rot}$) being configured to induce an induced electric excitation current ($i_{ex,ind}$) on the second rotor sub-winding (12) which is alternating, tree-phase and has a frequency equal to the excitation frequency ($f_{ex}$), the induced electric excitation current ($i_{ex,ind}$) is configured to flow in the first rotor sub-winding (11) so as to generate an induction rotating magnetic field ($B_{ind}$) such as to induce an alternating voltage ($V_s$), having a respective frequency ($f_s$) and a respective voltage amplitude ($\Delta V_s$), on the first stator winding (7), the frequency ($f_s$) of the alternating voltage ($V_s$) induced on the first stator winding (7) depends in a directly proportional way both on a rotation velocity ($N_r'$) of the rotor (3) and on the excitation frequency ($f_{ex}$);
**characterized by**
- regulating the frequency ($f_s$) and the amplitude ($\Delta V_s$) of the alternating voltage ($V_s$) with respect to respective desired values ($f_{ref}$, $V_{ref}$) as a function of a desired value ($\Delta V_{ref}$) of the voltage amplitude ($\Delta V_s$; $\Delta V_s'$; $\Delta V_s''$) of the alternating voltage ($V_s$; $V_s'$; $V_s''$) induced in the stator winding (7) and as a function of the rotation velocity ($N_r'$) of the rotor (3) and of the electric excitation current ($i_{ex}$) in the excitation winding (5) comprises the step of varying the amplitude of the induced electric excitation current ($i_{ex,ind}$) by varying the excitation current amplitude ($\Delta i_{ex}$) of the electric excitation current ($i_{ex}$).

**7.** Control method of a synchronous electric generator (1) according to claim 6, further comprising the step of regulating the rotation velocity of the rotating magnetic field ($B_{rot}$) by varying a frequency of the excitation electric current ($i_{ex}$).

**Patentansprüche**

**1.** Synchroner elektrischer Generator (1), umfassend:

einen Stator (2) mit:

- einer Erregerwicklung (5); und
- einer ersten und zweiten Statorwicklung (7, 9), die getrennt und unabhängig von der Erregerwicklung (5) sind;

einen Rotor (3) mit:

- einer Rotorwicklung (15), die eine erste und eine zweite Rotor-Unterwicklung (11, 12) umfasst, wobei die erste Rotor-Unterwicklung (11) magnetisch mit der ersten Statorwicklung (7) gekoppelt ist und die zweite Rotor-Unterwicklung (12) magnetisch mit der Erregerwicklung (5) gekoppelt ist; und
- mindestens ein von der Rotorwicklung (15) unabhängiges magnetisches Element (13), das so gelagert ist, dass es sich fest mit dem Rotor (3) verbunden dreht und so angeordnet ist, dass es magnetisch mit der zweiten Statorwicklung (9) gekoppelt ist; und

eine Steuereinheit (4), die mit dem Stator (2) wirkverbunden ist;
wobei die Erregerwicklung (5) und die erste und zweite Statorwicklung (7, 9) dreiphasige Systeme sind und über jeweilige dreiphasige Leitungen (6, 8, 10) mit der Steuereinheit (4) verbunden sind,
wobei der synchrone elektrische Generator (1) ferner einen Hilfsgenerator (16) umfasst, der mit der Steuereinheit (4) verbunden ist, um die Steuereinheit (4) elektrisch zu versorgen, und das mindestens eine magnetische Element (13) und die zweite Statorwicklung (9) umfasst;
wobei die Steuereinheit (4) konfiguriert ist, der Erregerwicklung (5) einen elektrischen Erregerstrom ($i_{ex}$) zuzuführen, der ein dreiphasiger Wechselstrom ist und eine Erregerfrequenz ($f_{ex}$) sowie eine Erregerstromamplitude ($\Delta i_{ex}$) aufweist, um so ein rotierendes Magnetfeld ($B_{rot}$) zu erzeugen, dessen Frequenz der Erregerfrequenz ($f_{ex}$) des elektrischen Erregerstroms ($i_{ex}$) entspricht;
wobei das rotierende Magnetfeld ($B_{rot}$) so konfiguriert ist, um auf der zweiten Rotor-Unterwicklung (12) einen induzierten elektrischen Erregerstrom ($i_{ex,ind}$) zu induzieren, der ein dreiphasiger Wechselstrom ist und die Frequenz ($f_{ex}$) aufweist;
wobei der induzierte elektrische Erregerstrom ($i_{ex,ind}$) so konfiguriert ist, um in der ersten Rotor-Unterwicklung (11) zu fließen, um ein Induktions-Rotationsmagnetfeld ($B_{ind}$) zu erzeugen, um eine Wechselspannung ($V_s$) mit einer entsprechenden Frequenz ($f_s$) und einer entsprechenden Spannungsamplitude ($\Delta V_s$) an der ersten Statorwicklung (7) zu induzieren;
wobei die Frequenz ($f_s$) der an der ersten Statorwicklung (7) induzierten Wechselspannung ($V_s$) in direkter Proportionalität sowohl von einer Rotationsgeschwindigkeit ($N_r'$) des Rotors (3) als auch von der Erregerfrequenz ($f_{ex}$) abhängt;
**dadurch gekennzeichnet, dass**
der synchrone elektrische Generator (1) konfiguriert ist, die Frequenz ($f_s$) und die Amplitude ($\Delta V_s$) der Wechselspannung ($V_s$) in Bezug auf die jeweiligen gewünschten Werte ($f_{ref}$, $V_{ref}$) als Funktion eines gewünschten Werts ($\Delta V_{ref}$) der Spannungsamplitude ($\Delta V_s$; $\Delta V_s'$; $\Delta V_s''$) der an der Statorwicklung (7) induzierten Wechselspannung ($V_s$; $V_s'$; $V_s''$) und als Funktion der Rotationsgeschwindigkeit ($N_r'$) des Rotors (3) sowie vom elektrischen Erregerstrom ($i_{ex}$) in der Erregerwicklung (5) zu regulieren, indem die Amplitude des induzierten elektrischen Erregerstroms ($i_{ex,ind}$) durch Variieren der Erregerstromamplitude ($\Delta i_{ex}$) des elektrischen Erregerstroms ($i_{ex}$) variiert wird.

2. Synchroner elektrischer Generator (1) nach Anspruch 1, wobei die Rotationsgeschwindigkeit des rotierenden Magnetfeldes ($B_{rot}$) durch Variieren einer Frequenz des elektrischen Erregerstroms ($i_{ex}$) eingestellt wird.

3. Synchroner elektrischer Generator (1) nach Anspruch 1 oder 2, wobei die Geschwindigkeit des Induktions-Rotationsmagnetfelds ($B_{ind}$) sowohl von der Rotationsgeschwindigkeit ($N_r'$) des Rotors (3) als auch von der Rotationsgeschwindigkeit des rotierenden Magnetfelds ($B_{rot}$) abhängt.

4. Synchroner elektrischer Generator (1) nach Anspruch 1, wobei:

das mindestens eine magnetische Element (13) mindestens einen Permanentmagneten umfasst; und
die Steuereinheit (4) einen Wechselrichter umfasst, der mit der Hilfswicklung (9) verbunden ist.

5. Synchroner elektrischer Generator (1) nach Anspruch 1, wobei:

das mindestens eine magnetische Element (13) multipolar ist; und
die Steuereinheit (4) einen Zyklokonverter umfasst, der mit der Hilfswicklung (9) verbunden ist.

6. Steuerverfahren für einen synchronen elektrischen Generator (1), umfassend:

einen Stator (2) mit:

- einer Erregerwicklung (5); und
- einer ersten und zweiten Statorwicklung (7, 9), die getrennt und unabhängig von der Erregerwicklung (5) sind;

einen Rotor (3) mit:

- einer Rotorwicklung (15), die eine erste und eine zweite Unterwicklung (11, 12) umfasst, wobei die erste Rotor-Unterwicklung (11) magnetisch mit der ersten Stator-Unterwicklung (7) und die zweite Rotor-Unterwicklung (12) magnetisch mit der Erregerwicklung (5) gekoppelt ist; und
- mindestens ein von der Rotorwicklung (15) unabhängiges magnetisches Element (13), das so gelagert ist, dass es sich fest mit dem Rotor (3) verbunden dreht und so angeordnet ist, dass es magnetisch mit der zweiten Statorwicklung (9) gekoppelt ist; und

eine Steuereinheit (4), die mit dem Stator (2) wirkverbunden ist;
wobei die Erregerwicklung (5) und die erste und zweite Statorwicklung (7, 9) dreiphasige Systeme sind und über jeweilige dreiphasige Leitungen (6, 8, 10) mit der Steuereinheit (4) verbunden sind,
wobei der synchrone elektrische Generator (1) ferner einen Hilfsgenerator (16) umfasst, der mit der Steuereinheit (4) verbunden ist, um die Steuereinheit (4) elektrisch zu versorgen, und das mindestens eine magnetische Element (13) und die zweite Statorwicklung (9) umfasst;
wobei das Steuerverfahren die Schritte umfasst:

- Bereitstellen eines elektrischen Erregerstroms ($i_{ex}$) zur Erregerwicklung (5), der ein dreiphasiger Wechselstrom ist und eine Erregerfrequenz ($f_{ex}$) sowie eine Erregerstromamplitude ($\Delta i_{ex}$) aufweist, um so ein rotierendes Magnetfeld ($B_{rot}$) zu erzeugen, dessen Frequenz der Erregerfrequenz ($f_{ex}$) des elektrischen Erregerstroms ($i_{ex}$) entspricht, wobei das rotierende Magnetfeld (Brot) so konfiguriert ist, um auf der zweiten Rotor-Unterwicklung (12) einen induzierten elektrischen Erregerstrom ($i_{ex,ind}$) zu induzieren, der ein dreiphasiger Wechselstrom ist und die Frequenz ($f_{ex}$) aufweist;

wobei der induzierte elektrische Erregerstrom ($i_{ex,ind}$) so konfiguriert ist, um in der ersten Rotor-Unterwicklung (11) zu fließen, um ein Induktions-Rotationsmagnetfeld ($B_{ind}$) zu erzeugen, um eine Wechselspannung ($V_s$) mit einer entsprechenden Frequenz ($f_s$) und einer entsprechenden Spannungsamplitude ($\Delta V_s$) an der ersten Statorwicklung (7) zu induzierrn,
wobei die Frequenz ($f_s$) der an der ersten Statorwicklung (7) induzierten Wechselspannung (Vs) in direkter Proportionalität sowohl von einer Rotationsgeschwindigkeit ($N_r'$) des Rotors (3) als auch von der Erregerfrequenz ($f_{ex}$) abhängt;
**dadurch gekennzeichnet, dass**

- ein Regulieren der Frequenz ($f_s$) und der Amplitude ($\Delta V_s$) der Wechselspannung ($V_s$) in Bezug auf jeweilige gewünschte Werte ($f_{ref}$, $V_{ref}$) als Funktion eines gewünschten Werts ($\Delta V_{ref}$) der Spannungsamplitude ($\Delta V_s$; $\Delta V_s'$; $\Delta V_s''$) der an der Statorwicklung (7) induzierten Wechselspannung ($V_s$; $V_s'$; $V_s''$) und als Funktion der Rotationsgeschwindigkeit ($N_r'$) des Rotors (3) sowie vom elektrischen Erregerstrom ($i_{ex}$) in der Erregerwicklung (5), den Schritt des Variierens der Amplitude des induzierten elektrischen Erregerstroms ($i_{ex,ind}$) durch Variation der Erregerstromamplitude ($\Delta i_{ex}$) des elektrischen Erregerstroms ($i_{ex}$), umfasst.

7. Steuerverfahren für einen synchronen elektrischen Generator (1) nach Anspruch 6, ferner umfassend den Schritt des Regulierens der Rotationsgeschwindigkeit des rotierenden Magnetfeldes ($B_{rot}$) durch Variieren einer Frequenz des elektrischen Erregerstroms ($i_{ex}$).

## Revendications

1. Générateur électrique synchrone (1) comprenant :

un stator (2) comportant :

- un enroulement d'excitation (5) ; et
- un premier et un deuxième enroulement de stator (7, 9) qui sont séparés et indépendants de l'enroulement d'excitation (5) ;

un rotor (3) comprenant :

- un enroulement de rotor (15) comportant un premier et un deuxième sous-enroulement de rotor (11, 12), le premier sous-enroulement de rotor (11) étant couplé magnétiquement au premier sous-enroulement de stator (7) et le deuxième sous-enroulement de rotor (12) étant couplé magnétiquement à l'enroulement d'excitation (5) ; et
- au moins un élément magnétique (13) indépendant de l'enroulement de rotor (15), monté de façon à tourner d'un seul tenant avec le rotor (3) et agencé de façon à être couplé magnétiquement au deuxième enroulement de stator (9) ; et

une unité de commande (4) couplée de manière fonctionnelle au stator (2) ;

dans lequel l'enroulement d'excitation (5) et le premier et le deuxième enroulement de stator (7, 9) sont des systèmes triphasés et sont couplés à l'unité de commande (4) par des lignes triphasées (6, 8, 10) respectives,

dans lequel le générateur électrique synchrone (1) comprend en outre un générateur électrique auxiliaire (16) connecté à l'unité de commande (4) pour alimenter électriquement l'unité de commande (4) et comprend l'au moins un élément magnétique (13) et le deuxième enroulement de stator (9) ;

dans lequel l'unité de commande (4) est configurée pour fournir à l'enroulement d'excitation (5) un courant d'excitation électrique ($i_{ex}$) qui est un courant alternatif triphasé et a une fréquence d'excitation ($f_{ex}$) et une amplitude de courant d'excitation ($\Delta i_{ex}$), de façon à générer un champ magnétique tournant ($B_{rot}$) ayant une fréquence égale à la fréquence d'excitation ($f_{ex}$) du courant d'excitation électrique ($i_{ex}$) ;

le champ magnétique tournant ($B_{rot}$) étant configuré pour induire un courant d'excitation électrique induit ($i_{ex,ind}$) sur le deuxième sous-enroulement de rotor (12) qui est alternatif, triphasé et a une fréquence égale à la fréquence d'excitation ($f_{ex}$) ;

le courant d'excitation électrique induit ($i_{ex,ind}$) est configuré pour circuler dans le premier sous-enroulement de rotor (11) de façon à générer un champ magnétique tournant d'induction ($B_{ind}$) de façon à induire une tension alternative ($V_s$), ayant une fréquence ($f_s$) respective et une amplitude de tension ($\Delta V_s$) respective, sur le premier enroulement de stator (7) ;

dans lequel la fréquence ($f_s$) de la tension alternative ($V_s$) induite sur le premier enroulement de stator (7) dépend d'une manière directement proportionnelle à la fois d'une vitesse de rotation ($N_r'$) du rotor (3) et de la fréquence d'excitation ($f_{ex}$) ;

**caractérisé en ce que**

le générateur électrique synchrone (1) est configuré pour réguler la fréquence ($f_s$) et l'amplitude ($\Delta V_s$) de la tension alternative ($V_s$) par rapport à des valeurs ($f_{ref}$, $V_{ref}$) souhaitées respectives en fonction d'une valeur ($\Delta V_{ref}$) souhaitée de l'amplitude de tension ($\Delta V_s$ ; $\Delta V_s'$ ; $\Delta V_s''$) de la tension alternative ($V_s$ ; $V_s'$ ; $V_s''$) induite dans l'enroulement de stator (7) et en fonction de la vitesse de rotation ($N_r'$) du rotor (3) et du courant d'excitation électrique ($i_{ex}$) dans l'enroulement d'excitation (5) en faisant varier l'amplitude du courant d'excitation électrique induit ($i_{ex,ind}$) en faisant varier l'amplitude de courant d'excitation ($\Delta i_{ex}$) du courant d'excitation électrique ($i_{ex}$).

2. Générateur électrique synchrone (1) selon la revendication 1, dans lequel la vitesse de rotation du champ magnétique tournant ($B_{rot}$) est ajustée en faisant varier une fréquence du courant d'excitation électrique ($i_{ex}$).

3. Générateur électrique synchrone (1) selon la revendication 1 ou 2, dans lequel la vitesse du champ magnétique tournant d'induction ($B_{ind}$) dépend à la fois de la vitesse de rotation ($N_r'$) du rotor (3) et de la vitesse de rotation du champ magnétique tournant ($B_{rot}$).

4. Générateur électrique synchrone (1) selon la revendication 1, dans lequel :

l'au moins un élément magnétique (13) comprend au moins un aimant permanent ; et
l'unité de commande (4) comprend un onduleur connecté à l'enroulement électrique auxiliaire (9).

5. Générateur électrique synchrone (1) selon la revendication 1, dans lequel :

l'au moins un élément magnétique (13) est multipolaire ; et
l'unité de commande (4) comprend un cycloconvertisseur connecté à l'enroulement électrique auxiliaire (9).

6. Méthode de commande d'un générateur électrique synchrone (1) comprenant :

un stator (2) comportant :

- un enroulement d'excitation (5) ; et
- un premier et un deuxième enroulement de stator (7, 9) qui sont séparés et indépendants de l'enroulement d'excitation (5) ;

un rotor (3) comprenant :

- un enroulement de rotor (15) comportant un premier et un deuxième sous-enroulement de rotor (11, 12), le premier sous-enroulement de rotor (11) étant couplé magnétiquement au premier sous-enroulement de stator (7) et le deuxième sous-enroulement de rotor (12) étant couplé magnétiquement à l'enroulement d'excitation (5) ; et
- au moins un élément magnétique (13) indépendant de l'enroulement de rotor (15), monté de façon à tourner d'un seul tenant avec le rotor (3) et agencé de façon à être couplé magnétiquement au deuxième enroulement de stator (9) ; et

une unité de commande (4) couplée de manière fonctionnelle au stator (2) ;
dans laquelle l'enroulement d'excitation (5) et le premier et le deuxième enroulement de stator (7, 9) sont des systèmes triphasés et sont couplés à l'unité de commande (4) par des lignes triphasées (6, 8, 10) respectives, dans laquelle le générateur électrique synchrone (1) comprend en outre un générateur électrique auxiliaire (16) connecté à l'unité de commande (4) pour alimenter électriquement l'unité de commande (4) et comprend l'au moins un élément magnétique (13) et le deuxième enroulement de stator (9) ;
dans laquelle la méthode de commande comprend les étapes suivantes :

- la fourniture, à l'enroulement d'excitation (5), d'un courant d'excitation électrique ($i_{ex}$) qui est un courant alternatif triphasé et a une fréquence d'excitation ($f_{ex}$) et une amplitude de courant d'excitation ($\Delta i_{ex}$), de façon à générer un champ magnétique tournant ($B_{rot}$) ayant une fréquence égale à la fréquence d'excitation ($f_{ex}$) du courant d'excitation électrique ($i_{ex}$), le champ magnétique tournant ($B_{rot}$) étant configuré pour induire un courant d'excitation électrique induit ($i_{ex,ind}$) sur le deuxième sous-enroulement de rotor (12) qui est alternatif, triphasé et a une fréquence égale à la fréquence d'excitation ($f_{ex}$), le courant d'excitation électrique induit ($i_{ex,ind}$) est configuré pour circuler dans le premier sous-enroulement de rotor (11) de façon à générer un champ magnétique tournant d'induction ($Bi_{nd}$) de façon à induire une tension alternative ($V_s$), ayant une fréquence ($f_s$) respective et une amplitude de tension ($\Delta V_s$) respective, sur le premier enroulement de stator (7), la fréquence ($f_s$) de la tension alternative ($V_s$) induite sur le premier enroulement de stator (7) dépend d'une manière directement proportionnelle à la fois d'une vitesse de rotation ($N_r$') du rotor (3) et de la fréquence d'excitation ($f_{ex}$) ;

**caractérisée en ce que**

- la régulation de la fréquence ($f_s$) et de l'amplitude ($\Delta V_s$) de la tension alternative ($V_s$) par rapport à des valeurs ($f_{ref}$, $V_{ref}$) souhaitées respectives en fonction d'une valeur ($\Delta V_{ref}$) souhaitée de l'amplitude de tension ($\Delta V_s$ ; $\Delta V_s$' ; $\Delta V_s$") de la tension alternative ($V_s$ ; $V_s$' ; $V_s$") induite dans l'enroulement de stator (7) et en fonction de la vitesse de rotation ($N_r$') du rotor (3) et du courant d'excitation électrique ($i_{ex}$) dans l'enroulement d'excitation (5) comprend l'étape de variation de l'amplitude du courant d'excitation électrique induit ($i_{ex,ind}$) en faisant varier l'amplitude de courant d'excitation ($\Delta i_{ex}$) du courant d'excitation électrique ($i_{ex}$).

7. Méthode de commande d'un générateur électrique synchrone (1) selon la revendication 6, comprenant en outre l'étape de régulation de la vitesse de rotation du champ magnétique tournant ($B_{rot}$) en faisant varier une fréquence du courant d'excitation électrique ($i_{ex}$).

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102020000003632
- US 2016365814 A1
- US 5675188 A